# EUROPEAN PATENT APPLICATION

(11) **EP 4 636 653 A1**
(43) Date of publication of application: **22.10.2025**
(21) Application number: 23904007.4
(22) Date of filing: 13.12.2023
(51) Int. Cl.: G06N 3/10, G06F 9/4401

(54) **PLUG-AND-PLAY-BASED METHOD FOR PROVIDING DESCRIPTION OF ARTIFICIAL INTELLIGENCE MODEL**

(30) Priority: 16.12.2022 KR 20220176909
(71) Applicant: Korea Advanced Institute of Science and Technology, Daejeon 34141 (KR)
(72) Inventor: CHOI, Jae Sik, Seoul 06214 (KR)
(74) Representative: Viering, Jentschura & Partner mbB Patent- und Rechtsanwälte
(86) International application number: PCT/KR2023/020560
(87) International publication number: WO 2024/128807

(57) **Abstract**

A method of providing an explanation of an artificial intelligence model based on a plug-and-plug mode includes a service provider server setting a type of an artificial intelligence model, a plug-and-play manager recognizing an artificial intelligence model and creating a list of available explanation modules on the basis of a recognition result when the artificial intelligence model is input, the service provider server providing key information on explanation modules to a user terminal, the user terminal selecting one of the explanation modules and notifying the service provider server of the selected explanation module, the plug-and-play manager deriving the selected explanation module from among the explanation modules in the list, and the derived explanation module providing an explanation of the input artificial intelligence model to the user terminal.

## Description

### Technical Field

The present invention relates to a method of providing an explanation of an artificial intelligence model, and more specifically, to a method of providing an explanation of an artificial intelligence model based on a plug-and-play mode, by which a module for explaining a given artificial intelligence model is automatically found in a plug-and-play mode to provide an explanation in a way that is easy for a user to understand.

### Background Art

Nowadays, with the development of artificial intelligence, artificial intelligence technology is being actively applied to many fields such as image recognition, speech recognition, conversation systems, and autonomous driving. Although artificial intelligence technology is being applied to many areas of real life, and artificial intelligence technology is developing day by day, structures of artificial intelligence models trained on data continue to become more complex, making it difficult to accurately understand the principles of decision-making of artificial intelligence models.

If such a complex artificial intelligence model is applied to a mission critical task that has a significant impact on human life or property, consumers may suffer damage as a result of using an incomplete artificial intelligence model. To deal with this, the EU has been mandating the explainability of artificial intelligence models through the General Data Protection Regulation (GDPR) since 2018, and has recently raised the standard to classify artificial intelligence technology involved in human biometric signals, autonomous driving, personnel evaluation, and credit evaluation as high-risk artificial intelligence to more intensively demand reliability and transparency of artificial intelligence models.

Although various methods are being developed to explain the decision-making of artificial intelligence models, explanations need to be provided by reflecting various characteristics of artificial intelligence models. Accordingly, it is difficult to explain the decision-making of all models using one method, and thus an algorithm for explaining the decision-making is separately provided for each artificial intelligence model.

For example, technology for explaining an artificial intelligence model with a decision tree structure, technology for explaining a deep learning model, and technology for explaining a Bayesian-based probability model are different, and there are technologies for providing general-purpose explanations, but the accuracy is often low.

Deep learning frameworks such as "TensorFlow" from Google and "Pytorch" from Meta also explain deep learning using a method called "Integrated Gradient" and a technology called "DeepLift" which are technologies for explaining deep learning decision-making, but they merely provide an explanation of a deep learning model developed in each platform.

Meanwhile, Korean Patent Publication No. 10-2020-0092447 discloses "Explainable Artificial Intelligence Modeling and Simulation System and Method" which includes designing an artificial intelligence workflow model upon selection of an algorithm suitable for a workflow created and edited for a subject area from among stored algorithms, and when input information is input, performing a simulation on the artificial intelligence workflow model for the input information.

The above-described patent document has advantages of visualization of connection of algorithms based on a workflow, automatic verification of performance through integrated simulation, simultaneous simulation of a plurality of artificial intelligence algorithms based on workflows for comparison of mutual performance, and explanation of cause/basis with images and standardized features from results of classification analysis to suggest directions for improving the performance of algorithms. However, this technology is a mechanism for, when an algorithm suitable for a workflow created/edited for a subject area such as semiconductors and display manufacturing processes is selected, designing an artificial intelligence workflow model corresponding thereto and performing simulations, and thus this also merely provides explanations or simulations of artificial intelligence models designed under specific conditions, and as a result, has a problem of not being able to universally explain various artificial intelligence models.

### Disclosure

### Technical Problem

Therefore, the present invention has been made in view of the above problems, and it is an object of the present invention to provide a method of providing an explanation of an artificial intelligence model based on a plug-and-play mode, by which general explanations of various artificial intelligence models can be provided, and an explanation module for explaining a given artificial intelligence model can be automatically found in a plug-and-play mode to provide an explanation in a way that is easy for a user to understand.

It is another object of the present invention to provide a method of providing explainability for artificial intelligence models based on a plug-and-play mode by which, when an explanation of an artificial intelligence model is required, an algorithm capable of ascertaining various characteristics of the artificial intelligence model and explaining the artificial intelligence model can be automatically found, and a user can be allowed to select a format and content that can be explained to be provided with customized explanations.

### Technical Solution

In accordance with an aspect of the present invention, the above and other objects can be accomplished by the provision of a method of providing an explanation of an artificial intelligence model based on a plug-and-plug mode, based on a system for proving an explanation of an artificial intelligence model based on a plug-and-plug mode, including a service provider server equipped with an explanation module for providing an explanation of an artificial intelligence model and a plug-and-play manager for connecting an artificial intelligence model and the explanation module, and providing an explanation of an artificial intelligence model, and a user terminal configured to communicate with the service provider server over the Internet and to receive an explanation service for artificial intelligence models from the service provider server, the method including a) a step in which a controller of the service provider server sets a type of artificial intelligence model explainable by each explanation module for communication between an artificial intelligence model and an explanation module, b) a step in which, when an artificial intelligence model requiring explanation is input, the plug-and-play manager recognizes a manufacturer, framework, and type of the artificial intelligence model, c) a step in which the plug-and-play manager creates a list of available explanation modules on the basis of a recognition result in consideration of constraints on explanation modules, d) a step in which the service provider server provides key information on explanation modules in the list of available explanation modules to the user terminal, e) a step in which the user terminal selects one of the explanation modules in the list with reference to the key information on the explanation modules in the list and notifies the service provider server of the selected explanation module, f) a step in which the plug-and-play manager derives the explanation module selected by the user terminal from among the explanation modules in the list, and g) a step in which the derived explanation module provides an explanation of the input artificial intelligence model to the user terminal.

Here, the plug-and-play manager may have a list of explanation modules provided in advance by developers of explainable artificial intelligence, and the explanation module may have information on types of explainable artificial intelligence models.

Further, in step a), for communication between an artificial intelligence model and an explanation module, an artificial intelligence model may be divided into an explainable artificial intelligence explanation target, an explanation technique (explanation kernel), an explanation method, and an explanation modal.

Here, the explanation technique (explanation kernel) may be divided into an explanation module for explaining an input contribution of an artificial intelligence model and an explanation module for explaining the inside of the artificial intelligence model.

Here, the explanation target may be an AI module including at least one of a convolutional neural network (CNN/DNN), a recurrent neural network (RNN/LSTM), a transformer, a decision tree, Bayesian, or a finite state machine (FSM) or an AI model composed of a combination of at least two of the CNN/DNN, RNN/LSTM, transformer, decision tree, Bayesian, or FSM.

Here, the explanation modal may be an explanation interface suitable for different data formats for vision, language, voice time series, and behavior.

Further, step b) may include configuring an interface between the artificial intelligence model and an explanation module for explaining input of the artificial intelligence model, and configuring an interface between the artificial intelligence model and the explanation module for explaining the inside of the artificial intelligence model.

Here, the explanation module may provide global explanation (statistical contribution considering entire data) and local explanation (contribution to specific input data) values with respect to input variables and internal variables of the artificial intelligence model in order to explain decision-making of the artificial intelligence model to the interfaces.

Further, in step d), the key information on the explanation modules in the list of available explanation modules may include characteristics of each explanation module and an explanation method and interfaces supported by each explanation module.

Further, when the derived explanation module provides an explanation of the input artificial intelligence model in step g), the derived explanation module may provide a local explanation based on individual data and a global explanation based on verification data.

Here, the local explanation may include an input contribution explanation and a counterfactual example explanation, and the global explanation may include a feature importance explanation.

### Advantageous Effects

According to the present invention, various artificial intelligence models are universally explained, and an explanation module for explaining a given artificial intelligence model is automatically found in a plug-and-play mode for explanation, and thus it is possible to provide explanations in a way that is easy for users to understand.

In addition, by ascertaining various characteristics of an artificial intelligence model, automatically finding an algorithm capable of explaining the artificial intelligence model, and allowing a user to select a format and content that can be explained, a customized explanation can be provided to the user.

### Description of Drawings

FIG. 1 is a diagram schematically showing a configuration of a system for providing an explanation of an artificial intelligence model based on a plug-and-play mode, constructed to implement a method of providing an explanation according to the present invention;
FIG. 2 is a flowchart showing a process of performing a method of providing an explanation of an artificial intelligence model based on a plug-and-play mode according to an embodiment of the present invention;
FIG. 3 is a diagram showing classification of an artificial intelligence model as an explainable artificial intelligence explanation target (XAI target), an explanation technique (explanation kernel), an explanation method, and an explanation modal;
FIGS. 4A, 4B, 4C and 4D are diagrams schematically showing representative algorithms of explainable artificial intelligence employed to implement the method of the present invention;
FIG. 5 is a diagram showing a sequence operation between a user terminal and a plug-and-play manager in relation to the method of providing an explanation of an artificial intelligence model based on a plug-and-play mode according to the present invention; and
FIG. 6 is a diagram showing a mechanism of selecting a user-customized plug-and-play artificial intelligence model explanation interface used to implement the method of the present invention.

### Mode for Disclosure

Hereinafter, embodiments of the present invention will be described in detail with reference to the attached drawings.

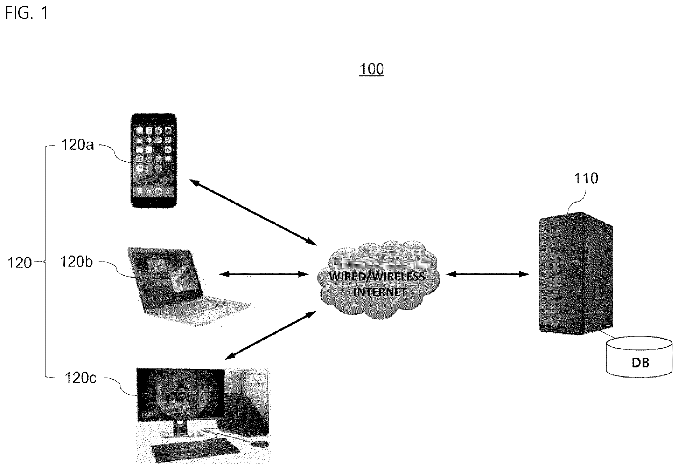

FIG. 1 is a diagram schematically showing a configuration of a system for providing an explanation of an artificial intelligence model based on a plug-and-play mode, constructed to implement a method of providing an explanation of an artificial intelligence model based on a plug-and-play mode according to the present invention.

Referring to FIG. 1, the system 100 for providing an explanation of an artificial intelligence model based on the plug-and-play mode, constructed to implement the method of providing an explanation of an artificial intelligence model based on a plug-and-play mode according to the present invention, includes a service provider server 110 and a user terminal 120.

The service provider server 110 basically includes a controller and a memory in which an explanation module (which is an application as a kind of software program) for providing an explanation of an artificial intelligence model, and a plug-and-play manager (an application as a kind of software program) that connects an artificial intelligence model and an explanation module are stored (installed), and provides an explanation of an artificial intelligence model. The service provider server 110 may be configured as a general desktop PC and may include a database (DB) in which data and information related to various services are stored.

The user terminal 120 communicates with the service provider server 110 over the Internet and receives an explanation service for artificial intelligence models from the service provider server 110. The user terminal 120 may include a mobile phone (smartphone) 120a, a laptop computer 120b, a desktop computer 120c, etc.

Hereinafter, a method of providing an explanation of an artificial intelligence model based on a plug-and-play mode, based on the system for providing an explanation of an artificial intelligence model based on a plug-and-play mode having the above configuration will be described below.

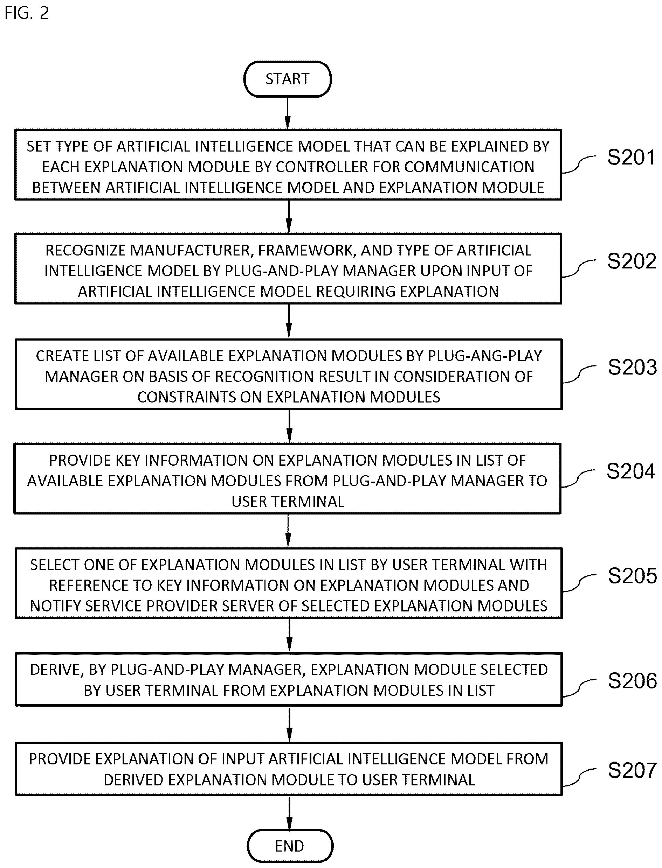

FIG. 2 is a flowchart showing a process of performing the method of providing an explanation of an artificial intelligence model based on a plug-and-play mode according to an embodiment of the present invention.

Referring to FIG. 2, the method of providing an explanation of an artificial intelligence model based on a plug-and-play mode according to the present invention is a method of providing an explanation of an artificial intelligence model based on the above-described system 100 for providing an explanation of an artificial intelligence model based on a plug-and-play mode, which includes the service provider server 110 that is equipped with explanation modules for providing explanations of artificial intelligence models and the plug-and-play manager for connecting an artificial intelligence model and an explanation module and provides an explanation of an artificial intelligence model, and the user terminal 120 that receives the explanation service for artificial intelligence models from the service provider server 110. In the method, first, the controller (not shown) of the service provider server 110 sets a type of artificial intelligence model that can be explained by each explanation module for communication between an artificial intelligence model and an explanation module (step S201). Here, the plug-and-play manager may have a list of explanation modules provided in advance by developers of explainable artificial intelligence, and the explanation modules may have information on the types (manufacturers, formats, languages, etc.) of explainable artificial intelligence models.

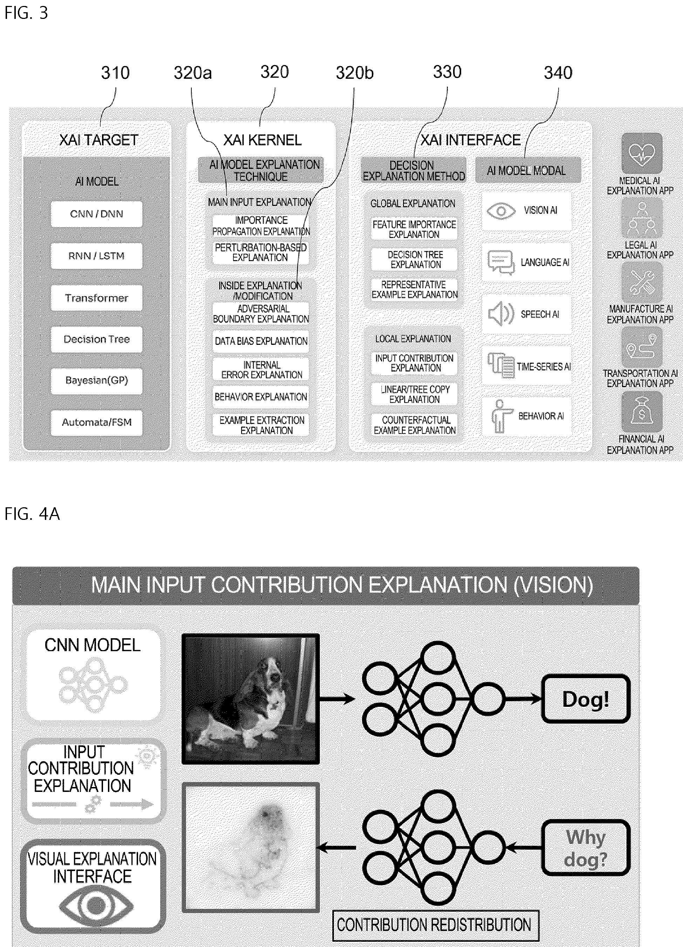

In addition, for communication between an artificial intelligence model and an explanation module, an artificial intelligence model may be classified as an explainable artificial intelligence explanation target (XAI target) 310, an explanation technique (explanation kernel) 320, an explanation method 330, and an explanation modal 340, as shown in FIG. 3. Here, the explanation technique (explanation kernel) 320 may be divided into an explanation module 320a for explaining an input contribution of an artificial intelligence model, and an explanation module 320b for explaining the inside of the artificial intelligence model.

Further, the explanation target 310 may be an AI model including at least one of a convolutional neural network (CNN/DNN), a recurrent neural network (RNN/LSTM), a transformer, a decision tree, Bayesian, or a finite state machine (FSM), or an AI model composed of a combination of at least two or more thereof.

Further, the explanation technique (explanation kernel) 320 may be an algorithm technique for explaining an input contribution of an artificial intelligence model (importance propagation explanation and perturbation-based explanation) or explaining the internal operating principle (adversarial boundary explanation, behavior explanation, and example-based explanation).

Further, the explanation method 330 is a method of providing an explanation, and may be a method of explaining the global operating principle of an artificial intelligence model or the input data local operating principle. That is, the explanation method 330 is a method of providing an explanation of more important input of an AI model, or calculating and explaining a local contribution of each input around a specific input.

Further, the explanation modal 340 can provide explanation interfaces suitable for different data formats for vision, language, speech, time series, and behavior.

The explanation target (XAI target) 310, explanation technique (explanation kernel) 320, explanation method 330, and explanation modal 340 as described above may provide explanations in relation to application fields such as medicine, law, manufacturing, transportation, and finance.

Meanwhile, when an artificial intelligence model requiring explanation is input, the plug-and-play manager recognizes the manufacturer, framework, and type of the input artificial intelligence model (step S202). Recognition of the manufacturer, framework, and type of the input artificial intelligence model by the plug-and-play manage will be described later. Here, an interface between the artificial intelligence model and an explanation module for explaining input of the artificial intelligence model can be configured, and an interface between the artificial intelligence model and the explanation module for explaining the inside of the artificial intelligence model can be configured.

At this time, the explanation module can provide global explanation (statistical contribution considering entire data) and local explanation (contribution to specific input data) values with respect to input variables and internal variables of the artificial intelligence model in order to explain decision-making of the artificial intelligence model to the interfaces.

As described above, after recognizing the manufacturer, framework, and type of the input artificial intelligence model, the plug-and-play manager creates a list of available explanation modules on the basis of the recognition result in consideration of constraints on explanation modules (step S203).

Then, the service provider server 110 provides key information on explanation modules in the list of available explanation modules to the user terminal 120 (step S204). Here, the key information on the explanation modules in the list of available explanation modules may include characteristics of each explanation module and an explanation method and interfaces supported by each explanation module.

When the key information on the explanation modules in the list of available explanation modules is provided from the service provider server 110 to the user terminal 120, the user terminal 110 selects one of the explanation modules in the list with reference to the key information and notifies the service provider server 110 of the selected explanation module (step S205).

Accordingly, the plug-and-play manager in the service provider server 110 derives the explanation module selected by the user terminal 120 from among the explanation modules in the list (step S206).

Then, the derived explanation module provides an explanation of the input artificial intelligence model to the user terminal (step S207). Here, when the derived explanation module provides an explanation of the input artificial intelligence model, the explanation module can provide a local explanation based on individual data and a global explanation based on verification data.

Here, the local explanation may include an input contribution explanation and a counterfactual example explanation, and the global explanation may include a feature importance explanation.

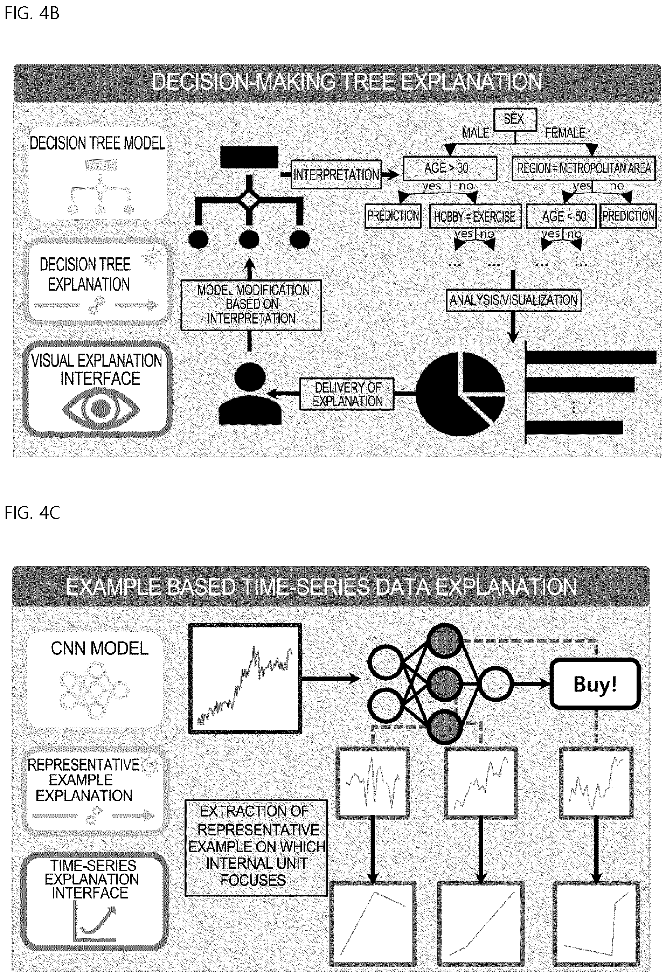

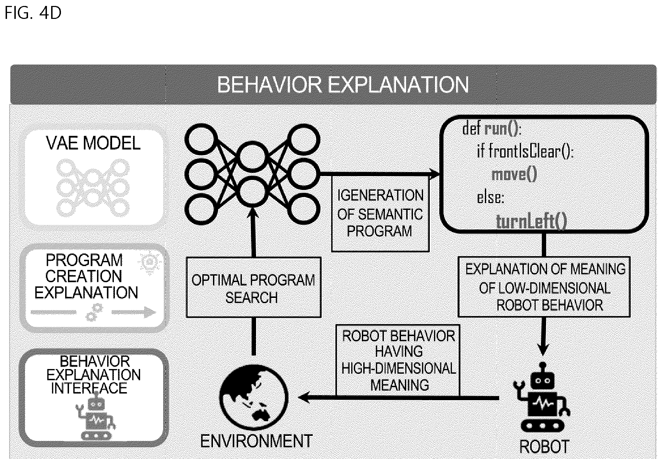

FIGS. 4A, 4B, 4C and 4D are diagrams schematically showing representative algorithms of explainable artificial intelligence employed to implement the method of the present invention.

Referring to FIG. 4A, an algorithm for explaining an input contribution explains which part of a dog image is used to determine a dog when the dog image is input.

Referring to FIG. 4B, an explanation algorithm for decision trees, which is widely used in financial credit rating models and the like, simplifies decision models to explain the same as a single decision model or extracts and explains changing decisions through counterfactual inference for changing several variables.

Referring to FIG. 4C, if it is decided to buy stocks/coins by looking at trends in time series data, an example-based explanation algorithm provides a representative trend pattern used for nodes inside a deep learning model to make that decision to help users understand the decision-making process.

Referring to FIG. 4D, a behavior explanation algorithm, which is widely used in reinforcement learning, extracts program code or a state machine that can be understood by humans from a reinforcement learning model that has learned behaviors and explains the same.

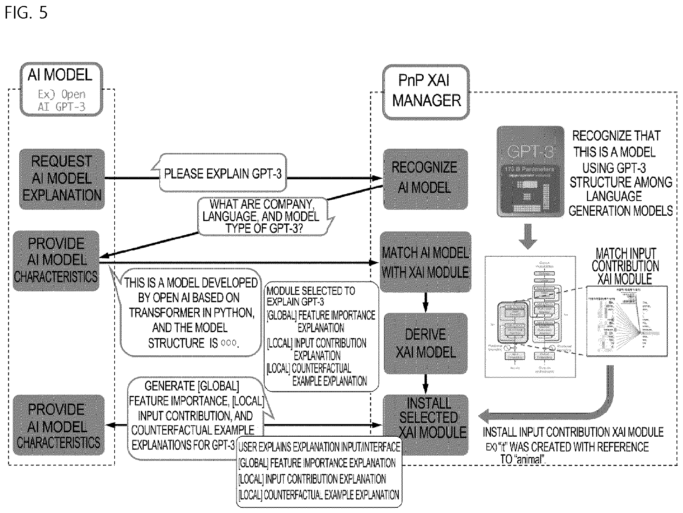

FIG. 5 is a diagram showing a sequence operation between the user terminal and the plug-and-play manager in relation to the method of providing an explanation of an artificial intelligence model based on a plug-and-play mode according to the present invention.

FIG. 5 shows a process of providing an explanation of a user-customized plug-and-play AI model. Referring to FIG. 5, when an explanation of an artificial intelligence model (AI model) (e.g., Open AI GPT-3) input from the user terminal is requested, the plug-and-play manager (PnP XAI manager) recognizes the AI model. For example, the plug-and-play manager recognizes that the input AI model is a model using the GPT-3 structure among language generation models.

Thereafter, the plug-and-play manager inquires about the manufacturer, language, and type of the AI model. Then, the user terminal provides the characteristics of the artificial intelligence model (AI model) as an answer to the inquiry. For example, the user terminal provides the characteristics of the artificial intelligence model (AI model) by responding "This is a model developed by Open AI based on Transformer in Python, and the model structure is ooo."

Accordingly, the plug-and-play manager matches the input artificial intelligence model (AI model) with an explanation module (XAI module), creates a list of explanation modules (XAI modules) that can explain the input artificial intelligence model (AI model), and provides the list to the user terminal, and the user terminal selects one explanation module (XAI module) from the list of explanation modules (XAI modules) and notifies the plug-and-play manager of the selected explanation module.

Then, the plug-and-play manager derives the explanation module selected by the user terminal from the explanation modules in the list, and the derived explanation module provides an explanation of the input artificial intelligence model. Here, when the derived explanation module provides an explanation of the input artificial intelligence model, the explanation module can provide global and local explanations. In other words, the derived explanation module can provide a global feature importance explanation of the input artificial intelligence model (GPT-3) and provide a local input contribution explanation and counterfactual example explanation.

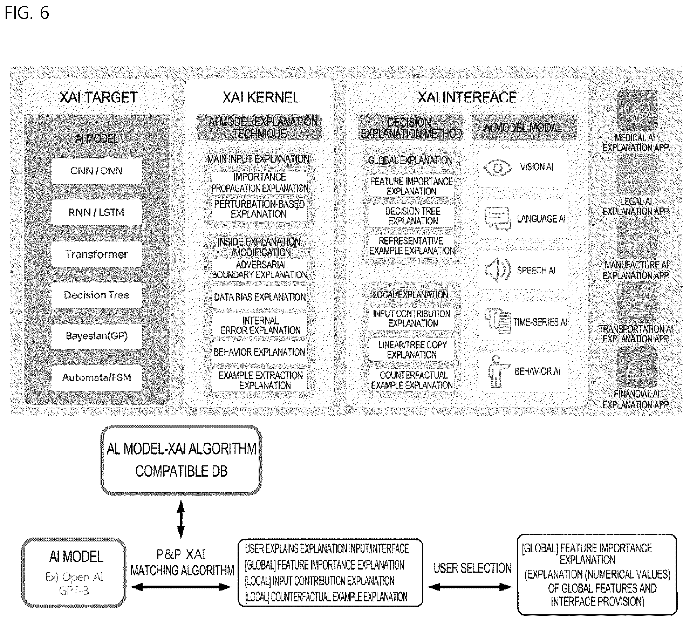

FIG. 6 is a diagram showing a mechanism of selecting a user-customized plug-and-play artificial intelligence model explanation interface used to implement the method of the present invention.

Referring to FIG. 6, an explainable artificial intelligence (XAI) interface is divided into a decision explanation method area and an AI model modal area, and the decision explanation method area is further divided into a global explanation area and a local explanation area.

As described in FIG. 5, an explanation module that can explain an input artificial intelligence model is derived, and an explanation of the input artificial intelligence model is provided by the derived explanation module. Here, if the user (user terminal) selects "feature importance explanation" in the global explanation area, selects "input contribution explanation" and "counterfactual example explanation" in the local explanation area, and provides the selected explanations to the service provider server, the plug-and-play manager within the service provider server provides the selected items to an explanation module (an explanation module derived to explain the artificial intelligence model), and the explanation module provides a global feature importance explanation and a local input contribution explanation and counterfactual example explanation with respect to the input artificial intelligence model (GPT-3) on the basis of the selected items.

As described above, the method of providing an explanation of an artificial intelligence model based on a plug-and-play mode according to the present invention provides general explanations of various artificial intelligence models and automatically finds an explanation module for explaining a given artificial intelligence model in a plug-and-play mode, and thus can provide explanations in a way that is easy for users to understand.

In addition, by ascertaining characteristics of various artificial intelligence models, automatically finding an algorithm capable of explaining artificial intelligence models, and allowing a user to select a format and content that can be explained, it is possible to provide a customized explanation to the user.

## Claims

1. A method of providing an explanation of an artificial intelligence model based on a plug-and-plug mode, based on a system for proving an explanation of an artificial intelligence model based on a plug-and-plug mode, including: a service provider server equipped with an explanation module for providing an explanation of an artificial intelligence model and a plug-and-play manager for connecting an artificial intelligence model and the explanation module, and providing an explanation of an artificial intelligence model; and a user terminal configured to communicate with the service provider server over the Internet and to receive an explanation service for artificial intelligence models from the service provider server, the method comprising:
a) a step in which a controller of the service provider server sets a type of artificial intelligence model explainable by each explanation module for communication between an artificial intelligence model and an explanation module;
b) a step in which, when an artificial intelligence model requiring explanation is input, the plug-and-play manager recognizes a manufacturer, framework, and type of the artificial intelligence model;
c) a step in which the plug-and-play manager creates a list of available explanation modules on the basis of a recognition result in consideration of constraints on explanation modules;
d) a step in which the service provider server provides key information on explanation modules in the list of available explanation modules to the user terminal;
e) a step in which the user terminal selects one of the explanation modules in the list with reference to the key information on the explanation modules in the list and notifies the service provider server of the selected explanation module;
f) a step in which the plug-and-play manager derives the explanation module selected by the user terminal from among the explanation modules in the list; and
g) a step in which the derived explanation module provides an explanation of the input artificial intelligence model to the user terminal.

2. The method of claim 1, wherein the plug-and-play manager has a list of explanation modules provided in advance by developers of explainable artificial intelligence, and the explanation module has information on types of explainable artificial intelligence models.

3. The method of claim 1, wherein, in step a), for communication between an artificial intelligence model and an explanation module, an artificial intelligence model is divided into an explainable artificial intelligence explanation target, an explanation technique (explanation kernel), an explanation method, and an explanation modal.

4. The method of claim 3, wherein the explanation technique (explanation kernel) is divided into an explanation module for explaining an input contribution of an artificial intelligence model and an explanation module for explaining the inside of the artificial intelligence model.

5. The method of claim 3, wherein the explanation target is an AI module including at least one of a convolutional neural network (CNN/DNN), a recurrent neural network (RNN/LSTM), a transformer, a decision tree, Bayesian, or a finite state machine (FSM) or an AI model composed of a combination of at least two of the CNN/DNN, RNN/LSTM, transformer, decision tree, Bayesian, or FSM.

6. The method of claim 3, wherein the explanation modal is an explanation interface suitable for different data formats for vision, language, speech time series, and behavior.

7. The method of claim 1, wherein step b) comprises configuring an interface between the artificial intelligence model and an explanation module for explaining input of the artificial intelligence model, and configuring an interface between the artificial intelligence model and the explanation module for explaining the inside of the artificial intelligence model.

8. The method of claim 7, wherein the explanation module provides global explanation (statistical contribution considering entire data) and local explanation (contribution to specific input data) values with respect to input variables and internal variables of the artificial intelligence model in order to explain decision-making of the artificial intelligence model to the interfaces.

9. The method of claim 1, wherein, in step d), the key information on the explanation modules in the list of available explanation modules includes characteristics of each explanation module and an explanation method and interfaces supported by each explanation module.

10. The method of claim 1, wherein, when the derived explanation module provides an explanation of the input artificial intelligence model in step g), the derived explanation module provides a local explanation based on individual data and a global explanation based on verification data.

11. The method of claim 10, wherein the local explanation includes an input contribution explanation and a counterfactual example explanation, and the global explanation includes a feature importance explanation.
